# EUROPÄISCHE PATENTSCHRIFT

(11) **EP 0 819 038 B1**
(45) Veröffentlichungstag und Bekanntmachung des Hinweises auf die Patenterteilung: **01.09.1999**
(21) Anmeldenummer: 95943191.7
(22) Anmeldetag: 22.12.1995
(51) Int. Cl.: B24B 19/02, F01L 1/16

(54) **MASCHINENTEIL**
MACHINE PART
PARTIE DE MACHINE

(30) Priorität: 07.04.1995 DE 19513254
(43) Veröffentlichungstag der Anmeldung: 21.01.1998
(73) Patentinhaber: INA Wälzlager Schaeffler oHG, 91072 Herzogenaurach (DE)
(72) Erfinder: BACH, Peter, D-91074 Herzogenaurach (DE); KERN, Ludwig, D-91056 Erlangen (DE); STRIAN, Ernst, D-91358 Kunreuth (DE)
(86) Internationale Anmeldenummer: EP9505099
(87) Internationale Veröffentlichungsnummer: WO9631317

(56) Entgegenhaltungen:
- EP-A- 0 438 031
- DE-A- 3 524 412
- FR-A- 2 205 138
- GB-A- 992 743
- GB-A- 2 229 765

## Beschreibung

Die Erfindung betrifft ein Verfahren zum Herstellen eines Maschinenteils mit einer für einen Wälz- und/oder Gleitkontakt geeigneten Oberfläche, die eine plateauartige Struktur aufweist, die von einer Vielzahl sich einander kreuzenden Riefen unterbrochen ist, wobei die plateauartige Struktur durch eine zweite Honstufe eines zumindest zweistufigen Honprozesses gebildet ist, in dem Spitzen eines Profils einer ersten Honstufe bis zu einer Profilmittellinie abgetragen sind, so daß die Tiefe der Riefen durch das verbleibende Profil der ersten Honstufe bestimmt ist.

Derartige Plateauhonstrukturen sind bereits seit längerem bekannt und werden insbesondere bei der Endbearbeitung von Zylinderbohrungen in Motorblöcken von Otto- und Dieselmotoren zur Verbesserung der Laufeigenschaften der Zylinderlaufflächen angewendet (VDI-Z 125(1983) Nr. 14-Juli (II), Seite 995 ff., Fachgebiete in Jahresübersichten: Honen). Die Verbesserung der Laufbahneigenschaften beruht darauf, daß durch die einander kreuzenden Riefen ein verbessertes Ölrückhaltevermögen gegeben ist.

Der Nachteil dieser Lösung besteht darin, daß eine derartig strukturierte Oberfläche nicht allen Anwendungsfällen genügt, insbesondere dann nicht, wenn bei höchsten Lasten unter den Bedingungen einer Mangelschmierung Wälz- und Gleitkontakte gleichzeitig auftreten.

Aufgabe der Erfindung ist es daher, eine Topografie der Randzone zu entwikkeln, die auch bei hoher Tragfähigkeit und höchster Beanspruchung durch überlagerte Bedingungen von Wälzen und Gleiten und gleichzeitiger Mangelschmierung Ausfälle vermeidet.

Erfindungsgemäß wird diese Aufgabe bei dem gattungsgemäßen Verfahren dadurch gelöst, daß durch Eindrücken von Korn in die Oberfläche ausgehend von einem Eindruckkrater eine stochastisch verteilt auftretende, d. h. eine zufallsabhängige Materialverdrängung in horizontaler und vertikaler Richtung erfolgt, so daß die Riefen ganz oder teilweise zugesetzt sind und oberhalb der Profilmittellinie Aufwürfe entstehen, die durch einen sich anschließenden Poliervorgang bis zu einer Profilmittellinie abgetragen sind. Ein derartiges Korn kann bespielsweise ein Al₂O₃ bzw. Korundkorn sein. Durch das überlagerte Plateauhonen wird einerseits dafür gesorgt, daß die Oberflächenspitzen der ersten Honstruktur bis zu deren Profilmittellinie abgetragen werden, so daß die übrig bleibenden Plateaus mit einer vielfach geringeren Rauhtiefe einen hohen Materialanteil aufweisen und demzufolge über einen hohen Traganteil verfügen. Andererseits wird das durch die einander kreuzenden Riefen vorhandene Schmierstoffreservoir mit Hilfe der erfindungsgemäßen Materialverdrängung so verändert, daß durch den teilweisen bzw. völligen Verschluß der Riefen ein unkontrolliertes Abfließen des Schmiermittels nicht mehr möglich ist. Dieser Verschluß der Riefen wird auch durch das sich anschließende Polieren nicht aufgehoben, da die Aufwürfe in den Riefen in der ersten Honstufe durch ihre Lage unterhalb der Profilmittellinie nicht geglättet werden können, sondern nur oberhalb der Profillinie wegpoliert bzw. weggeschliffen werden.

Beim Aufbau der Grundstruktur wird zunächst die Struktur des vorangegangenen Arbeitsprozeßes vollständig beseitigt, d. h. durch den ersten Honvorgang werden beispielsweise Schleifspuren vollständig beseitigt, in dem die Oberflächenschicht bis in die Tiefe der Schleifriefen abgetragen wird. Als zweiter Schritt erfolgt nun der Aufbau der plateauartigen Struktur, indem durch den zweiten Honprozeß mit wesentlich kleinerer Körnung des Honsteines die erste Honstruktur soweit abgetragen wird, daß die gewünschten Plateaus mit geringer Rauhtiefe und hohem Traganteil sowie die Kreuzstruktur mit Riefen schräg zur Achse entsprechend der Körnung der ersten Honstufe erzeugt werden. Durch kinematisch definierte Einstellbedingungen der Honprozesse, wie Drehzahl des Werkstückes, Oszillationsfrequenz und Oszillationshub sowie eine entsprechende Körnung der Honsteine läßt sich dabei auf die gewünschte Struktur in vielfältiger Weise Einfluß nehmen. Als dritter Schritt schließt sich dann durch das temporäre Eindrücken von Schleifkorn die bereits beschriebene Materialverdrängung an, die zum Verschluß der einander kreuzenden Riefen führt.

Gemäß der Ausführungsform der Erfindung nach Anspruch 2 soll die Oberfläche mit einer Vielzahl von ungleichmäßig verteilt angeordneten winzigen Ausnehmungen versehen sein, wobei ein Flächenverhältnis von Riefen und Ausnehmungen von etwa 1:1 gegeben ist, das zur Gesamtfläche gesehen unter 15 % liegt. Die winzigen Ausnehmungen wirken dabei ebenfalls als Ölvorratsräume, aus denen kaum Öl, weder in Wälzrichtung, noch in eine Richtung senkrecht hierzu, austreten kann. Solche Ausnehmungen sind an sich bereits bekannt und werden beispielsweise in der DE 41 14 513 A1 ausführlich beschrieben.

In vorteilhafter Weiterbildung der Erfindung ist es nach Anspruch 3 vorgesehen, daß die unmittelbare Randschicht der Oberfläche eine der Hertz'schen Pressung entgegengerichtete Druckspannung von bis zu 1000 N/mm² aufweist. Das Maximum der Druckspannung kann dabei direkt an der Oberfläche oder bis in eine Tiefe von 100µm liegen. Eine derartige Eigenspannung bewirkt eine Reduzierung der wirksamen Schub und Zugspannungen im Werkstoff, so daß damit das Auftreten von Mikroschälungen und Rissen verhindert wird.

Die definierten Druckeigenspannungen, die in Höhe und Verlauf der Beanspruchung angepaßt sind, werden mit Hilfe von Strahlanlagen, sowie sie zum Kugelstrahlen üblicherweise verwendet werden, erzeugt. Dies kann beispielsweise dadurch geschehen, daß eine Vielzahl von Kügelchen mit Hilfe von Druckluft aus einer Düse mit hoher Trägheit auf die Oberfläche des zu behandelnden Werkstückes geschleudert werden. Dies führt dann dazu, daß in Abhängigkeit von vorgegebenen Parametern wie Durchmesser der Kugeln, Material der Kugeln und Auftreffgeschwindigkeit in der Oberfläche des Werkstückes die gewünschte Eigenspannung erzielt bzw. die gewünschten Ausnehmungen erzeugt werden. Aber auch ein Wasserstrahlen der Oberfläche ist denkbar.

In besonders vorteilhafter Weise wird nach Anspruch 4 die Oberfläche einer Rolle eines Nockenfolgers und/oder die Oberfläche eines Nockens mit der erfindungsgemäßen Struktur versehen, um bei Ventiltrieben von Brennkraftmaschinen Ausfälle bei hoher Beanspruchung durch die überlagerten Bedingungen von Wälzen und Gleiten in Verbindung mit ungünstigen Schmierbedingungen, d. h. unter Mangelschmierung, zu vermeiden.

Die Erfindung wird an nachstehendem Ausführungsbeispiel näher erläutert. Es zeigen:
- Figur 1: eine Seitenansicht eines Nockenfolgers, teilweise geschnitten,
- Figur 2: eine perspektivische Darstellung der von einem Nocken beaufschlagten Rolle,
- Figur 3: eine vergrößerte Schnittdarstellung der Oberfläche zur Erläuterung der Honstruktur,
- Figur 4: eine vergrößerte Schnittdarstellung der Oberfläche zur Erläuterung der erfindungsgemäßen Struktur.

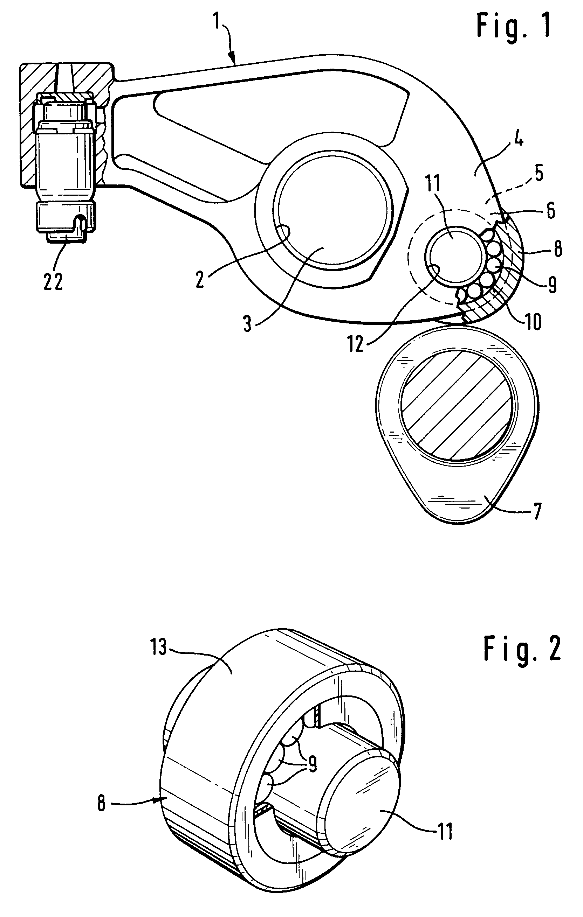

Ein mit dem Bezugszeichen 1 versehener Kipphebel ist in der Mitte mit einer durchgehenden Bohrung 2 versehen. Durch diese Bohrung 2 ist eine Welle 3 geführt, so daß der Kipphebel 1 an dieser Stelle einen Drehpunkt aufweist. Ein Abschnitt 4 des Kipphebels 1 ist mit einer Aussparung 5 versehen, die durch zwei Wangen 6 in axialer Richtung begrenzt ist. Eine mit einem Nocken 7 in Kontakt befindliche Rolle 8 ist in dieser Aussparung 5 gehalten. Die Rolle 8 ist mit einer eine Vielzahl von Lagernadeln 9 aufnehmenden zentralen Bohrung 10 versehen. Die Lagernadeln 9 bzw. der durch sie gebildeten Nadelkranz lagern die Rolle 8 drehbar auf einem Bolzen 11, der gleichzeitig die innere Laufbahn für den Nadelkranz 9 darstellt. Der Bolzen 11 ist in zwei Aufnahmebohrungen 12 der Wangen 6 befestigt. Wie insbesondere aus der perspektivischen Darstellung der Rolle 8 in Figur 2 erkennbar, soll deren Oberfläche 13 die erfindungsgemäße Struktur aufweisen.

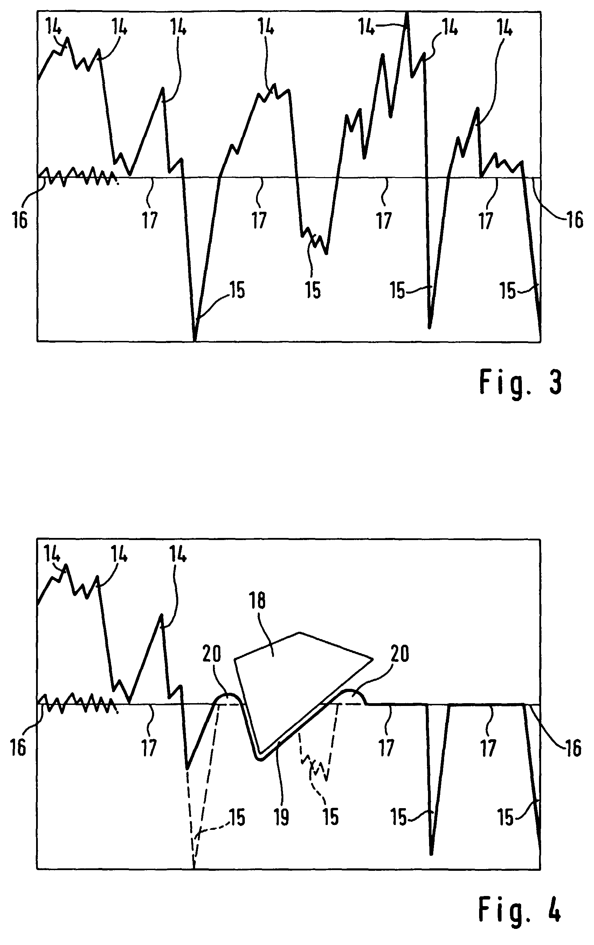

Die Figur 3 zeigt in stark vergrößerter und vereinfachter Darstellung die Oberfläche 13 der vorstehend beschriebenen Rolle 8 nach den beiden Honprozessen. Es ist erkennbar, daß die Oberfläche 13 in unterschiedlicher Höhe Spitzen 14 und Täler 15 aufweist, deren Abstand von der höchsten Spitze 14 bis zum tiefsten Tal 15 als Rauhtiefe bezeichnet wird. Die Bearbeitung der Oberfläche 13 der Rolle 8 wird nun derart vorgenommen, daß die Spitzen 14 bis auf eine Profilmittellinie 16 abgetragen werden. Nach dieser Bearbeitung ergibt sich eine Struktur, wie sie schematisch auf der linken Seite von Figur 3 dargestellt ist. Durch das überlagerte Honverfahren werden die Spitzen 14 der ersten Honstufe bis zu einer Profilmittellinie 16 abgetragen, während die Täler 15 dieser Honstufe erhalten bleiben. Auf diese Weise erzielt man im Bereich der Lauffläche mehrere Plateaus 17, die im Verhältnis zur ersten Honstufe eine wesentlich geringere Rauhigkeit aufweisen, so daß die Plateaus 17 eine relativ ebene Lauffläche mit hoher Tragfähigkeit besitzen. In den verbleibenden Täler 15 der ersten Honstufe kann sich nun eine genügende Schmiermittelmenge ansammeln, die um so größer ist, je tiefer die Täler 15 sind.

Wie aus Figur 4 erkennbar, wird ein Schleifkorn 18 in ein Plateau 17 eingedrückt. Das Schleifkorn 18 erzeugt durch sein Eindringen in die Oberfläche einen Eindruckkrater 19, so daß das voher an dieser Stelle befindliche Material des ehemaligen Plateaus 17 in horizontaler bzw. in vertikaler Richtung verschoben wird. Durch diese Materialverdrängung werden die vorhandenen Riefen 15 teilweise oder vollständig zugeschmiert, so daß die Riefen 15 in gewünschter Weise in ihrer Längsausdehnung begrenzt sind. Dadurch wird das unkontrollierte Abfließen von Schmiermittel verhindert. Die ebenfalls bei der Materialverdrängung durch das Schleifkorn 18 entstehenden Aufwürfe 20 werden anschließend durch einen Poliervorgang bis auf die Höhe der Profilmittellinie 16 zurückgenommen. Ein Öffnen der Riefen 15 erfolgt durch den Poliervorgang nicht, da dieser nur oberhalb der Profilmittellinie 16 wirksam ist.

Die Oberfläche 13 einer Rolle 8 eines Nockenfolgers wurde in der beschriebenen Weise durch ein zweistufiges Honverfahren mit einer Strukturierung versehen, wie sie in Figur 4 dargestellt ist. Die maximale Rauhtiefe betrug im vorliegenden Fall 2,0 µm und das gemeinsame Flächenverhältnis von einander kreuzenden Riefen und winzigen Ausnehmungen wurde mit 9 % festgestellt, wobei Riefen eine Breite von etwa 2µm besaßen und 4 % der Gesamtfläche einnahmen, während die flächenhaften Ausnehmungen eine Größe von 30 - 60µm² aufweisen und 5% der Fläche einnahmen. Ein mit einer derartigen Rolle bestückter Nockenfolger wurde nun einem verschärften Test mit höchsten Belastungen unterworfen. Dabei zeigt es sich, daß auch unter den Bedingungen einer Mangelschmierung Risse bzw. Abschälungen nicht aufgetreten sind. Natürlich ist die Ausbildung der erfindungsgemäßen Wälz- und/oder Gleitkontaktfläche nicht auf einen Nockenfolger für eine Brennkraftmaschine beschränkt, sondern kann überall dort angewendet werden, wo geschmierte Funktionsflächen einen plateauartigen Aufbau mit geringer Rauhtiefe erfordern, wobei die sich einander kreuzenden Riefen nur eine begrenzte Ausdehnung erfahren, d. h. zur Verhinderung des Abflusses von Schmiermittel ab und an unterbrochen sind.

### Bezugszahlenliste

- 1: Kipphebel
- 2: Bohrung
- 3: Welle
- 4: Abschnitt
- 5: Aussparung
- 6: Wange
- 7: Nocken
- 8: Rolle
- 9: Nadel
- 10: Bohrung
- 11: Bolzen
- 12: Bohrung
- 13: Oberfläche
- 14: Spitze
- 15: Tal bzw. Riefe
- 16: Profilmittellinie
- 17: Plateau
- 18: Schleifkorn
- 19: Eindruckkrater
- 20: Aufwürfe

## Patentansprüche

1. Verfahren zum Herstellen eines Maschinenteils mit einer für einen Wälz- und/oder Gleitkontakt geeigneten Oberfläche (13), die eine plateauartige Struktur (17) aufweist, die von einer Vielzahl sich einander kreuzenden Riefen (15) unterbrochen ist, wobei die plateauartige Struktur (17) durch eine zweite Honstufe eines zumindest zweistufigen Honprozesses gebildet ist, indem Spitzen (14) eines Profils einer ersten Honstufe bis zu einer Profilmittellinie (16) abgetragen sind, so daß die Tiefe der Riefen (15) durch das verbleibende Profil der ersten Honstufe bestimmt ist, **dadurch gekennzeichnet**, daß durch Eindrücken von Korn (18) in die Oberfläche (13) ausgehend von einem Eindruckkrater (19) eine stochastisch verteilt auftretende Materialverdrängung in horizontaler und vertikaler Richtung erfolgt, so daß die Riefen (15) ganz oder teilweise zugesetzt sind und oberhalb der Profilmittellinie (16) Aufwürfe (20) entstehen, die durch einen sich anschließenden Poliervorgang bis zur Profilmittellinie (16) abgetragen sind.

2. Verfahren nach Anspruch 1, **dadurch gekennzeichnet**, daß die Oberfläche (13) mit einer Vielzahl von ungleichmäßig verteilt angeordneten winzigen Ausnehmungen versehen ist, wobei ein Flächenverhältnis von Riefen (15) und Ausnehmungen von etwa 1:1 gegeben ist, das zur Gesamtfläche gesehen unter 15 % liegt.

3. Verfahren nach Anspruch 1, **dadurch gekennzeichnet**, daß die unmittelbare Randschicht der Oberfläche (13) bis in eine Tiefe von 100 µm eine der Hertz'schen Pressung entgegengerichtete Druckspannung bis zu 1.000 N/mm² aufweist.

4. Verfahren nach Anspruch 1 oder 2, dadurch gekennzeichnet, daß die Oberfläche (13) einer wälz- oder gleitgelagerten Rolle (8) eines Nockenfolgers (1) und/oder einem Nocken (7) zugeordnet ist.

## Claims

1. Method of making a machine part with a surface (13) suitable for a rolling and/or sliding contact and having a plateau-like structure (17) interrupted by a plurality of intersecting furrows (15), the plateau-like structure (17) being formed by a second honing step of an at least two-step honing process in which peaks (14) of a profile of a first honing step are removed up to a mean profile line (16) so that the depth of the furrows (15) is defined by the profile left over from the first honing step, **characterised in that,** by pressing grain (18) into the surface (13), at first, an indentation crater (19) is formed following which, a stochastically distributed displacement of material takes place in horizontal and vertical direction so that the furrows (15) are wholly or partly filled and mounds (20) are formed above the mean profile line (16) which are removed up to the level of the mean profile line (16) by a subsequent polishing process.

2. Method according to Claim 1, **characterised in that** the surface (13) is provided with a plurality of non-uniformly distributed minute recesses, an area ratio between the furrows (15) and the recesses being approximately 1 : 1 which, in relation to the total surface area, is less than 15 %.

3. Method according to Claim 1, **characterised in that** the outermost edge layer of the surface (13) exhibits, up to a depth of 100 µm, a compressive stress of up to 1000 N/mm² opposed to the Hertzian stress.

4. Method according to Claim 1 or 2, **characterised in that** the surface (13) is associated to a roller (8) of a cam follower (1) mounted for rolling or sliding, and/or to a cam (7).

## Revendications

1. Méthode de fabriquer une pièce de machine ayant une surface (13) convenant à un contact de roulement et/ou de glissement, laquelle surface (13) possède une structure du type plateau (1) interrompue de plusieurs cannelures (15) entrelacées et qui est formée par une deuxième passe de pierrage d'un procédé de pierrage à au moins deux passes par enlèvement de sommets (14) d'un profil formé par une première passe de pierrage jusqu'au niveau d'une ligne moyenne de profil (16), de sorte que la profondeur des cannelures (15) est déterminée par le profil subsistant de la première passe de pierrage, caractérisée en ce que, en pressant d'abord un grain (18) dans un cratère d'indentation (19) dans la surface (13), on provoque un déplacement de matériau réparti stochastiquement en direction horizontale et en direction verticale, de sorte que les cannelures (15) sont remplies tout à fait ou en partie, et des entassements (20) se produisent en dessus de la ligne moyenne de profil (16) qu'on enlève ensuite par un procédé de polissage.

2. Méthode selon la revendication 1, caractérisée en ce que la surface (13) est munie de nombreux évidements minuscules, répartis de manière non uniforme, le rapport d'aire entre les cannelures (15) et les évidements étant d'à peu près 1 : 1 et représentant moins de 15 % de la surface totale.

3. Méthode selon la revendication 1, caractérisée en ce que la couche la plus extérieure de la surface (13) présente, jusque dans une profondeur de 100 µm, une contrainte de compression allant jusqu'à 1000 N/mm² à l'encontre de la pression hertzienne.

4. Méthode selon la revendication 2 ou 3, caractérisée en ce que la surface (13) est associée à un galet (8) d'un suiveur de came (élément de commande de soupape agencé entre l'arbre à cames et la soupape) (1) et/ou à une came (7), lequel galet (8) est monté en roulement ou en glissement.
